Europäisches Patentamt

European Patent Office

Office européen des brevets

(11) Publication number: 0 358 078 B1

# EUROPEAN PATENT SPECIFICATION

(45) Date of publication of patent specification: 05.05.93 (51) Int. Cl.5: C09K 11/54, C09K 11/02

(21) Application number: 89115844.6

(22) Date of filing: 28.08.89

(54) Fluorescent materials comprising zinc oxide whiskers.

(30) Priority: 29.08.88 JP 214010/88
17.02.89 JP 38596/89

(43) Date of publication of application:
14.03.90 Bulletin 90/11

(45) Publication of the grant of the patent:
05.05.93 Bulletin 93/18

(84) Designated Contracting States:
DE FR GB IT NL SE

(56) References cited:

CHEMICAL ABSTRACTS, vol. 96, no. 10, abstract no. 76951p, Columbus, Ohio, US; R. TAKAHASHI: "Luminescence of cadmium sulfide layer and whisker grown by vapor reaction in cadmium sulfide–indium system"

(73) Proprietor: MATSUSHITA ELECTRIC INDUSTRIAL CO., LTD.
1006, Oaza Kadoma
Kadoma–shi, Osaka–fu, 571(JP)

(72) Inventor: Yoshinaka, Minoru
1471, Inada
Higashiosaka–shi Osaka(JP)

Inventor: Asakura, Eizo
4–6, Furuedai 2–chome
Suita–shi Osaka(JP)
Inventor: Oku, Mitsumasa
2–3, Higashi Tokiwadai 6–chome Toyono–cho
Toyono–gun Osaka(JP)
Inventor: Kitano, Motoi
5–82, Seiwadai Nishi 1–chome
Kawanishi–shi Hyogo–ken(JP)
Inventor: Hamabe, Takeshi
610–26, Namaze Shiose–cho
Nishinomiya–shi Hyogo–ken(JP)
Inventor: Yagi, Jun
5–6, Kuzuhamentori–cho 2–chome
Hirakata–shi Osaka(JP)
Inventor: Sato, Takashige
23–5, Selfukuji–cho
Takatsuki–shi Osaka(JP)

(74) Representative: Tiedtke, Harro, Dipl.–Ing. et al
Patentanwaltsbüro Tiedtke–
Bühling–Kinne– Grupe–
Pellmann–Grams–Struif–Winter–Roth
Bavariaring 4
W–8000 München 2 (DE)

EP 0 358 078 B1

## Description

This invention relates to fluorescent materials which are suitable for use in speedometers of automobiles, the Braun tubes for color television, and other various fluorescent displays. More particularly, the invention relates to zinc oxide (ZnO) fluorescent materials which are able to emit light by application of low speed electron beams.

The fluorescent materials which are used for the above purposes should be able to emit fluorescence by application of low speed electron beams and should have an appropriate degree of electric conductivity. Broadly, this kind of fluorescent material can be classified into the following three groups which depend on the manner of impartment of the electric conductivity.

(1) The first group is one which makes use of a conductive material as a fluorescent material and includes, for example, combinations of ZnO:Zn, $SnO_2:Eu^{3+}$ and the like.

(2) The second group is one which employs mixtures of insulating fluorescent materials and conductive substances, e.g. $ZnS:Ag + In_2O_3$, $ZnS:CU + ZnO$, $Y_2O_2S:Eu^{+3} + SnO_2$ and the like.

(3) The third group is one which comprises insulating fluorescent materials doped with impurities so as to impart conductivity, e.g. ZnS:Ag, Cu, Al, $(Zn_{1-x}Cd_x)S:Ag$, Al, and the like.

It is known that ZnO is able to emit fluorescent light by application of low speed electron beams. The combination of ZnO and Zn as of the first group has been investigated and are now in practical use with respect to bluish green and red colors. Many attempts have been made to combinations of ZnO and other elements such as Ga, Cd, Eu, Y, S, Ag, Mn, In, Mg, F, O and the like in order to change the color of emitted light.

The ZnO used for the above purpose has generally a particulate or needle-like shape with a size of not larger than 1 micrometer. This type of ZnO fluorescent material is detrimental in poor luminance, life and luminous efficiency.

The fluorescent material of the second group which is made of a mixture of insulating fluorescent material and conductive material. For instance, high resistance fluorescent materials which are ordinarily used in the Braun tube for color TV, e.g. ZnS:Ag (blue in color), ZnS:Cu, Al (yellowish green in color) and $Y_2O_2S:Eu^{+3}$ (red in color), are mixed with powdery conductive materials such as $In_2O_3$, ZnO and the like. The amount of the conductive material used in the mixture may differ depending on the type of insulating fluorescent material and is generally in the range of from 5 to 50% by weight. From the standpoint of the luminous efficiency, the conductive material used is, in most case, $In_2O_3$.

However, $In_2O_3$ is an expensive material and thus, the resulting fluorescent material becomes expensive. Accordingly, there is a strong demand of fluorescent materials which have a high luminous efficiency and are low in cost.

It is an object of the invention to provide a fluorescent material which has good luminance, long life and good luminous efficiency.

It is another object of the invention to provide a fluorescent material which is comprised of ZnO whiskers of a specific form whereby the fluorescent material is made of an inexpensive material.

It is a further object of the invention to provide a fluorescent material which is comprised of a mixture of ZnO whiskers and particles of an insulating fluorescent material whereby a better luminous efficiency is attained since the ZnO whiskers are also fluorescent in nature.

According to one embodiment of the invention, there is provided a fluorescent material which consists essentially of whiskers of ZnO each having a central body and a plurality of needle crystal projections radially extending from the central body, the needle crystal projection having a basal part which contacts the central body and whose diameter is in the range of from 0.7 to 14 micrometers, and having a length of from the basal part to its tip of from 3 to 200 micrometers, or when using ZnO whiskers with a central body diameter and length outside the ranges defined above, the amount of said ZnO whiskers being not higher than 80 wt% of the total whiskers used. Preferably, four needle crystal projections radially extend from the central body, thereby forming a so-called tetrapod form. In order to change fluorescent characteristics and color, other elements may be mixed with the whiskers.

According to another embodiment of the invention, there is also provided a fluorescent material which comprises a mixture of an insulating fluorescent material and not less than 4 wt%, based on the fluorescent material, of zinc oxide whiskers each having a central body and a plurality of needle crystal projections radially extending from the central body, the needle crystal projection having a basal part which contacts the central body and whose diameter is in the range of from 0.1 to 14 micrometers, and having a length of from the basal part to its tip of from 6 to 200 micrometers, or when using ZnO whiskers with a central body diameter and length outside the ranges defined above, the amount of said ZnO whiskers being not higher than 80 wt% of the total whiskers used. Preferably, the whiskers have each four needle crystal projections

2

as in the first embodiment.

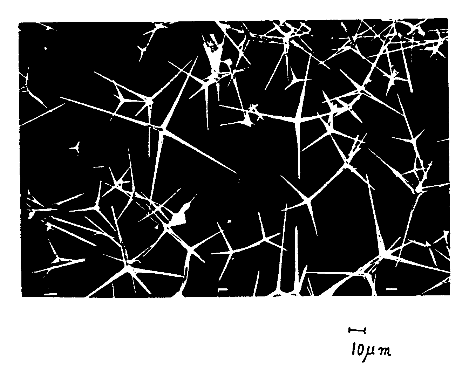

The sole figure is an electron microscope showing a crystalline structure of ZnO whiskers used in accordance with the invention.

In the first embodiment, the fluorescent material of the invention consists essentially of ZnO whiskers which have a central body and a plurality of needle crystal projections radially extending from the central body. The needle crystal projection have a diameter of the basal part and a length as defined in claim 1. The zinc oxide whiskers are first described.

Reference is now made to the accompanying drawing wherein typical zinc oxide whiskers used according to the invention are shown. Each whisker has a central body and a plurality of needle crystals extending radially from the central body and has thus a tetrapod form as is particularly shown in the figure. The number of the needle crystals is mainly four.

The zinc oxide whiskers used in the practice of the invention are obtained by thermally treating metallic zinc powder having an oxide film on the surface in an atmosphere containing molecular oxygen. The thermal treatment is effected, for example, at a temperature of from 700 to 1100°C, preferably from 800 to 1050°C and more preferably from 900 to 1000°C for 10 seconds or over, preferably from 30 seconds to 1 hour and more preferably from 1 to 30 minutes. Within these conditions, the whiskers can be appropriately controlled with respect to the diameter of the basal part and the length of the needle crystal projection. The resultant whiskers have an apparent bulk specific gravity of from 0.02 to 0.1 g/cc. The whiskers can be mass−produced at a high yield of not lower than 70 wt%. The thus produced whiskers are predominantly made of those which have a tetrapod form with four needle crystal projections extending from a central body. The needle crystal projection should preferably have a diameter of the basal part of from 0.7 to 14 micrometers and a length of from 3 to 200 micrometers.

The zinc oxide whiskers have generally a specific resistance of from 1 to 50 $\Omega-cm$ and a specific resistance of $10^3$ to $10^6$ $\Omega-cm$ in a powder state pressed at 5 kg/cm². If Al, Li Cu or the like is doped, the specific resistance can be changed from $10^{-2}$ to $10^{11}$ $\Omega-cm$. Fluorescent characteristics become remarkable especially when the specific resistance is in the range of from $10^{-2}$ to $10^3$ $\Omega-cm$.

The ZnO whiskers of the invention are considered to be an n−type semiconductor wherein Zn is in excess in the order of ppm and become a fluorescent material of ZnO:Zn as they are. Accordingly, the fluorescent material consisting essentially of ZnO whiskers is able to emit fluorescent light by application of a low−speed electron beam. The term "low−speed electron beam" used herein means a beam which is accelerated at a low voltage, for example, of from 10 to 100 volts or over. The ZnO whiskers are made of single crystals of a regularly shaped form which are colorless and transparent. Accordingly, they have a very high light transmittance. Light emitted at a lower part of a fluorescent layer can readily arrive at the surface of the layer, so that very good luminance and a very high luminous efficiency are obtained. In addition, the whiskers are relatively coarse particles with a small specific surface area. This minimizes degradation of the respective whiskers, thus leading to a remarkably improved life.

When other elements are added to the whiskers, fluorescent characteristics and/or color can be arbitrarily controlled.

Examples of starting materials for such elements as mentioned above include silver compounds such as silver nitrate, silver sulfide, silver halides and the like, a nitrate or silicate of Mn, gallium compounds such as gallium nitrate, gallium sulfide, gallium halides and the like, chlorides, bromides, iodides and fluorides of alkali metals such as Na, K, Li, Rb and Cs and alkaline earth metals such as Ca, Mg, Sr, Zn, Cd and Ba, aluminum compounds such as aluminum nitrate, aluminum sulfate aluminum oxide, aluminum halides and the like, and metal oxides such as $SiO_2$, $SnO_2$, $TiO_2$, $ZrO_2$, praseodymium oxide and the like. Moreover, rare earth elements, halogen elements, elements of Group VIIB of the Periodic Table, elements of Group VIB, elements of Group VA, elements of Group VB, elements of Group IVA. elements of Group IVB, elements of Group IIIA, elements of Group IIA and elements of Group IB may also be used.

Of these, gallium, alkaline earth elements and rare earth elements are preferably used in combination with the whiskers in order to improve fluorescent characteristics. The amount of these elements may depend on the color or fluorescent characteristics, and is generally in the range of from 1 to $10^4$ ppm.

ZnO whiskers may be formed as a fluorescent layer by ordinary techniques wherein they are dispersed in an aqueous medium such as water or an aqueous solution of an inorganic binder such as potassium silicate, thereby obtaining a slurry. The slurry is coated onto an appropriate substrate such as an anode conductor of a fluorescent display tube. If the aqueous binder solution is used for the dispersion, an aqueous solution of an electrolyte such as barium acetate is added thereby causing gelation to an extent. The dispersion in the form of the gel is applied on substrate. Preferably, the binder solution is used.

Alternatively, the whiskers and an intended element or starting material for the element are fixed and dispersed in such a medium as indicated above. The resultant dispersion is likewise applied onto substrate.

Moreover, the whiskers and additive elements may be sufficiently mixed and thermally treated at 500to 1500˚C for several hours, thereby facilitating the elements to be incorporated into the whiskers. If necessary, the thermally treated mixture which may be partially coagulated is gently pressed so that the coagulates are converted into primary particles. The mixture is slurried and applied in a manner as set out above.

During the course of the manufacture or treatment or compounding of the whiskers, the fine needle crystals of the whiskers may be broken to form whiskers having one, two and/or three needle crystals. The degree of the breakage may depending on the manner of handling of the whiskers. Moreover, other crystal systems including plate crystals may be formed in small amounts along with the tetrapod form crystals. The X−ray diffraction pattern of the whiskers manufactured by an ordinary process as described before reveals that all the types of whiskers have peaks of zinc oxide. Additionally, the electron beam diffraction pattern reveals that the whiskers exhibit single crystallinity with reduced numbers of dislocations and lattice defects. The results of the atomic absorption spectroscopy reveals that the content of impurities is small and the whiskers are made of 99.98% of zinc oxide.

The zinc oxide whiskers have been defined before with respect to the the diameter of the basal part of the needle crystal extending from the central body and the length extending from the basal part to the tip of the needle crystal, the central body having a size of from 0.7 to 14 micrometers.

If the whiskers whose needle crystals have a length larger than 200 micrometers and a diameter larger than 14 micrometers are used, the fluorescent surface undesirably coarse. On the other hand, when the whiskers whose needle crystals have a length of smaller than 3 micrometers and a diameter of smaller than 0.7 micrometers, the luminance and life lower considerably along with a poor luminous efficiency. The whiskers with the diameters and lengths which are larger or smaller than those defined before are contained in amounts not larger than 80 wt% of the total whiskers.

From the characteristic standpoint, a whisker product having a distribution of the needle crystal length of from 80 to 200 micrometers is better than a product having a length distribution of from 10 to 80 micrometers, which is in turn better than a whisker product having a length distribution of from 3 to 10 micrometers.

A fluorescent material which is made of a mixture of an insulating fluorescent substance and zinc oxide whiskers according to another embodiment of the invention is then described.

The zinc oxide whiskers used in this embodiment are those defined with respect to the first embodiment but have a diameter of the basal part of the needle crystals of from 0.1 to 14 micrometers and a length of from 6 to 200 micrometers. The reason why the lower limit of the length is 6 micrometers in this embodiment is that because insulating fluorescent materials are used as particles having not less than several micrometers, a length of 6 micrometers is necessary for developing the shape effect of the whiskers.

The whiskers of the tetrapod form are electrically conductive. When the whiskers are uniformly dispersed in and mixed with a fluorescent substance, a three−dimensional mesh structure is formed. Hence, the resultant mixture is effectively imparted with electric conductivity as a whole. Even when only a small amount of the whiskers is added to the insulating fluorescent material, the mixture is able to emit fluorescence by application of low−speed electron beams. In addition, since the whiskers also serve as a fluorescent substance which is excited by low−speed electron beams, the addition of the whiskers is advantageous from the standpoint of the luminous efficiency and the whiskers added to the insulating fluorescent substance do not work as an impurity on the luminous surface.

In this embodiment, the whiskers which have a specific resistance as indicated before may be doped with Al, Li, Cu or the like in order to control its specific resistance at a desired level for use as a conductor or to have a specific resistance of from $10^{-2}$ to $10^3$ $\Omega-$cm.

If zinc oxide whiskers which have a length of the needle crystal of larger than 200 micrometers and a diameter of larger than 14 micrometers at the basal part of the needle crystal are used in amounts of 80 wt% or higher, the fluorescent surface becomes undesirably coarse. On the other hand, when zinc oxide whiskers which have a length of smaller than 6 micrometers and a diameter of smaller than 0.1 micrometer are used in amounts of 80 wt% or higher, the amount of the whiskers sufficient to impart electric conductivity to the mixture increases greatly. Moreover, the luminous efficiency, luminance and life characteristics lower considerably. Accordingly, the amount of zinc oxide whiskers having larger or smaller sizes with respect to the diameter and length is not larger than 80 wt% of the total whiskers used.

The length of the needle crystals extending from the central body of the whisker is generally in the range of from 6 to 200 micrometers, preferably from 10 to 100, more preferably from 10 to 50 micrometers and most preferably from 15 to 50 micrometers.

The insulating fluorescent substances used in the invention may be any fluorescent substance of high resistance ordinarily used, for example, in the Braun tube for color television. Specific examples of the substance include $ZnS:Ag$, $ZnS:Cu$ or $Al$, $Y_2O_2S:Eu^{3+}$, $ZnS:Zn$, $ZnS:Au$, $Al$, $(Zn_{0.9}Cd_{0.1})S:Au$, $Al$, $(Zn_{0.8}Cd_{0.2})S$, $Al$, $(Zn_{0.3}Cd_{0.7})S:Ag$, $Cl$, $(Zn_{0.2}Cd_{0.8}):Ag$, $Cl$, $ZnS:Mn^{2+}$, and the like. Of these, $ZnS:Ag$ (blue in color), $ZnS:Cu$, $Al$ (yellowish green), and $Y_2O_2S:Eu^{3+}$ (red) are preferred. These substances are used as particles having a size of several to several tens micrometers.

The amount of the ZnO whiskers may be smaller than those amounts of ordinary conductive materials and may depend upon the size of the whisker, and is generally in the range of not less than 4 wt% of the mixture, within which electric conductivity develops. Preferably, the amount ranges from 4 to 20 wt%.

The present invention is more particularly described by way of examples.

Example 1

ZnO whiskers having a diameter of from 2 to 8 micrometers at a basal part of needle crystals and a length of the needle crystals ranging the basal part to the tip of from 10 to 80 micrometers were made by heating Zn powder having an oxide layer thereon in an atmosphere having a controlled content of oxygen at a temperature of 930°C for 20 minutes. The specific resistance of the whiskers in a pressed state at 5 $kg/cm^2$ was $10^4$ $\Omega - cm$.

The whiskers were dispersed in an aqueous solution of potassium silicate and gelled by addition of barium acetate and the dispersion was applied onto an anode conductor of a fluorescent display tube. The conductor was mounted in a display tube, followed by application of an anode voltage of 30 volts to evaluate a luminance and a luminous efficiency.

Further, degradation of the luminance after continuous use over 500 hours was determined. The results are shown in Table 1.

Example 2

The general procedure of Example 1 was repeated except that zinc oxide whiskers used had a diameter of from 10 to 14 micrometers at the basal part and a needle crystal length of from 80 to 200 micrometers. The results are shown in Table 1.

Comparative Example 1

The general procedure of Example 1 was repeated using commercially available luminescence grade ZnO powder. The results are shown in Table 1.

Example 3

One gram of the whiskers as obtained in Example 1 was mixed with 2.2 g of $Ga_2O_3$, 0/2 g of $CdCO_3$ and 0.02 g of $EU_2O_3$ by means of a V blender at 100 r.p.m., for 5 minutes while care was taken not to break the needle crystals and fired at 1300°C for 25 hours, followed by gentle pressing to obtain a fluorescent material as primary particles of the whiskers.

The general procedure of Example 1 was repeated using this fluorescent material. The results are shown in Table 1.

Table 1

| | Luminance (Ratio To Peak Intensity of Comp.Ex.1) | Luminous Efficiency (Ratio To the Efficiency of Comp.Ex.1) | Life (Degradation in Luminance After 500 Hrs. |
|---|---|---|---|
| Example 1 | 130 | 125 | 0.91 |
| Example 2 | 141 | 135 | 0.92 |
| Example 3 | 133 | 126 | 0.88 |
| Comp.Ex.1 | 100 | 100 | 0.79 |

Note: the value in "Life" is obtained by dividing an initial luminance value by a luminance value after 500 hours.

Example 4

Metallic zinc powder which had been mortared in water for 30 minutes and allowed to stand for 3 days thereby forming an oxide film thereon was fired at 1000°C in an atmosphere containing 10 to 15% by volume of oxygen, thereby obtaining white ZnO whiskers of a tetrapod form. The whiskers had a diameter of from 0.3 to 0.8 micrometers at a basal part of needle crystal projections and a length of from the basal part to tip of 10 to 15 micrometers.

Separately, a fluorescent substance for color television made of ZnS/Au, Al which had been prepared by an ordinary technique was provided and mixed with the 20 wt% of ZnO whiskers to obtain a conductive whisker − mixed fluorescent material.

This fluorescent material was dispersed in an aqueous potassium silicate solution and gelled by addition of barium acetate, and applied to an anode conductor with an area of 0.18 cm, followed by blowing hot air at 150°C for 24 hours and evacuation to a level of $10^{-6}$ Torr., thereby obtaining a test lamp. The lamp was subjected to measurements of luminous efficiency and luminance at an anode voltage of 20 volts. The results are shown in Table 2.

Examples 5 and 6

The general procedure of Example 4 was repeated using different amounts of the whiskers, with the results shown in Table 2.

Example 7

Metallic zinc powder which had been automatically mortared in water for 1 hour and allowed to stand for 5 days to form an oxide film thereon was fired at 1030°C in an atmosphere containing from 5 to 12% of oxygen, thereby obtaining white zinc oxide whiskers of a tetrapod form.

The general procedure of Example 4 was repeated using the whiskers obtained above. The test results are shown in Table 2.

Comparative Example 2

The general procedure of Example 4 was repeated using the zinc oxide whiskers in an amount outside the scope of the invention. The results are shown in Table 2.

Comparative Example 3

The general procedure of Example 4 was repeated except that there was used instead of the ZnO whiskers a known conductive material, $In_2O_3$. The results are shown in Table 2.

Comparative Example 4

The general procedure of Example 4 was repeated except that there was used instead of the ZnO whiskers zinc white obtained by the French method. The results are shown in Table 2.

Table 2 − 1

| | Insulating Fluorescent Substance | | Conductive Material | | Coating Thickness ($\mu$m) |
|---|---|---|---|---|---|
| | | | Size ($\mu$m) | Amount (wt%) | |
| Example 4 | ZnS/Au,Al | ZnO whiskers | needle crystal length 10 − 15 | 20 | 30 |
| Example 5 | do. | do. | do. | 10 | 30 |
| Example 6 | do. | do. | do. | 4 | 30 |
| Example 7 | do. | do. | needle crystal length 15 − 50 | 20 | 100 |
| Comp.Ex. 2 | do. | do. | needle crystal length 10 − 15 | 2 | 30 |
| Comp.Ex. 3 | do. | $In_2O_3$ | particle size about 2 | 20 | 30 |
| Comp.Ex. 4 | do. | zinc white | particle size about 0.5 | 10 | 30 |

Table 2 − 2

| | Results | |
|---|---|---|
| | Luminous Efficiency 1 m/w | Luminance cd/m$^2$ |
| Example 4 | 2.9 | 1,200 |
| Example 5 | 2.6 | 1,100 |
| Example 6 | 0.9 | 400 |
| Example 7 | 3.5 | 1,400 |
| Comp.Ex. 2 | no luminescence | no luminescence |
| Comp.Ex. 3 | 1.4 | 500 |
| Comp.Ex. 4 | no luminescence | no luminescence |

As will be apparent from the above table, the lamps of Examples 4 and 5 are better in the luminous efficiency and luminance than those of Comparative examples 2,3 and 4. In Example 6, the amount of the ZnO whiskers is as small as 4 wt% and the luminous efficiency and the luminance are at the same level as in Comparative Examples 3 using 20 wt% of $In_2O_3$.

Fluorescent materials comprising zinc oxide whiskers of a tetrapod form having a central body and needle crystal projections radially extending from the central body with or without additive elements capable of changing fluorescent characteristics and/or fluorescence color are described. The fluorescent materials may be a mixture of insulating fluorescent substance and the whiskers which are used mainly as a conductive material. These fluorescent materials are energized at low − speed electron beams and are capable of emitting fluorescence at low voltages.

**Claims**

1. A fluorescent material which consists essentially of whiskers of ZnO each having a central body and a plurality of needle crystal projections radially extending from the central body, the needle crystal projection having a basal part which contacts the central body and whose diameter is in the range of from 0,7 to 14 micrometers, and having a length of from the basal part to its tip from 3 to 200 micrometers, or when using ZnO whiskers with a central body diameter and length outside the ranges defined above, the amount of said ZnO whiskers being not higher than 80 wt% of the total whiskers used.

2. A fluorescent material according to claim 1, wherein the number of needle crystal projections is four.

3. A fluorescent material according to claim 1, wherein said whiskers are a mixture of a major proportion of whiskers having four needle crystal projections and a minor proportion of whiskers one, two, and/or three needle crystal projections.

4. A fluorescent material according to claim 1, wherein the length is in the range of from 80 to 200 micrometers.

5. A fluorescent material according to claim 1, further comprising up to $10^4$ ppm of an element capable of changing fluorescent characteristics and color of fluorescence.

6. A fluorescent material according to claim 5, wherein said element is a member selected from the group consisting of gallium, alkaline earth elements and rare earth elements.

7. A fluorescent material according to claim 1, wherein said whiskers are doped with a metal so that the specific resistance is in the range of from $10^{-2}$ to $10^{-3}$ $\Omega - cm$.

8. A fluorescent material according to claim 1, wherein said whiskers have a specific resistance of $10^3$ to $10^6$ $\Omega - cm$ in a pressed powder state at 5 kg/cm$^2$.

9. A fluorescent material which comprises a mixture of an insulating fluorescent material and not less than 4 wt%, based on the flourescent material, of zinc oxide whiskers each having a central body and a plurality of needle crystal projections radially extending from the central body, the needle crystal projection having a basal part which contacts the central body and whose diameter is in the range of from 0.1 to 14 micrometers, and having a length of from the basal part to its tip of from 6 to 200 micrometers, or when using ZnO whiskers with a central body diameter and a length outside the ranges defined above, the amount of said ZnO whiskers being not higher than 80 wt% of the total whiskers used.

10. A fluorescent material according to claim 9, wherein the number of needle crystal projections is four.

11. A fluorescent material according to claim 9, wherein said whiskers are a mixture of a major proportion of whiskers having four needle crystal projections and a minor proportion of whiskers one, two, and/or three needle crystal projections.

12. A fluorescent material according to claim 9, wherein the length is in the range of from 10 to 50 micrometers.

13. A fluorescent material according to claim 9, wherein said whiskers are dopes with a metal so that the specific resistance is in the range of from $10^{-2}$ to $10^3$ $\Omega - cm$.

14. A fluorescent material according to claim 9, wherein said whiskers have a specific resistance of $10^3$ to $10^6$ $\Omega - cm$ in a pressed powder state at 5 kg/cm$^2$.

15. A fluorescent material according to claim 9, wherein the insulating material is Zns:Ag, ZnS:Cu, Al or $Y_2O_2S:Eu^{3+}$.

**Patentansprüche**

1. Fluoreszenzstoff, der im wesentlichen aus ZnO − Whiskers besteht, die jeweils einen Zentralkörper und mehr als einen Nadelkristall − Vorsprung haben, der radial aus dem Zentralkörper herausragt, wobei der Nadelkristall − Vorsprung einen Grundteil hat, der den Zentralkörper berührt und dessen Durchmesser

8

EP 0 358 078 B1

in dem Bereich von 0,7 bis 14 Mikrometern liegt, und vom Grundteil bis zu seiner Spitze eine Länge von 3 bis 200 Mikrometern hat oder wobei in dem Fall, daß ZnO−Whiskers mit einem Zentralkörperdurchmesser und einer Länge, die außerhalb der vorstehend definierten Bereiche liegen, verwendet werden, die Menge der erwähnten ZnO−Whiskers nicht mehr als 80 Masse% der gesamten verwendeten Whiskers beträgt.

2. Fluoreszenzstoff nach Anspruch 1, bei dem die Zahl der Nadelkristall−Vorsprünge vier beträgt.

3. Fluoreszenzstoff nach Anspruch 1, bei dem die erwähnten Whiskers eine Mischung aus einem größeren Anteil von Whiskers mit vier Nadelkristall−Vorsprüngen und einem kleineren Anteil von Whiskers mit einem, zwei und/oder drei Nadelkristall−Vorsprüngen sind.

4. Fluoreszenzstoff nach Anspruch 1, bei dem die Länge in dem Bereich von 80 bis 200 Mikrometern liegt.

5. Fluoreszenzstoff nach Anspruch 1, der ferner bis zu $10^4$ ppm eines Elements enthält, das fähig ist, die Fluoreszenzeigenschaften und die Farbe der Fluoreszenz zu verändern.

6. Fluoreszenzstoff nach Anspruch 5, bei dem das erwähnte Element ein Mitglied ist, das aus der Gruppe ausgewählt ist, die aus Gallium, Erdalkalimetallen und Seltenerdmetallen besteht.

7. Fluoreszenzstoff nach Anspruch 1, bei dem die erwähnten Whiskers mit einem Metall dotiert sind, so daß der spezifische Widerstand in dem Bereich von $10^{-2}$ bis $10^3$ $\Omega \cdot$cm liegt.

8. Fluoreszenzstoff nach Anspruch 1, bei dem die erwähnten Whiskers im Zustand eines Pulverpreßlings bei 5 kg/cm$^2$ einen spezifischen Widerstand von $10^3$ bis $10^6$ $\Omega \cdot$cm haben.

9. Fluoreszenzstoff, der aus einer Mischung aus einem isolierenden Fluoreszenzstoff und nicht weniger als 4 Masse%, auf den Fluoreszenzstoff bezogen, Zinkoxidwhiskers besteht, die jeweils einen Zentralkörper und mehr als einen Nadelkristall−Vorsprung haben, der radial aus dem Zentralkörper herausragt, wobei der Nadelkristall−Vorsprung einen Grundteil hat, der den Zentralkörper berührt und dessen Durchmesser in dem Bereich von 0,1 bis 14 Mikrometern liegt, und vom Grundteil bis zu seiner Spitze eine Länge von 6 bis 200 Mikrometern hat oder wobei in dem Fall, daß ZnO−Whiskers mit einem Zentralkörperdurchmesser und einer Länge, die außerhalb der vorstehend definierten Bereiche liegen, verwendet werden, die Menge der erwähnten ZnO−Whiskers nicht mehr als 80 Masse% der gesamten verwendeten Whiskers beträgt.

10. Fluoreszenzstoff nach Anspruch 9, bei dem die Zahl der Nadelkristall−Vorsprünge vier beträgt.

11. Fluoreszenzstoff nach Anspruch 9, bei dem die erwähnten Whiskers eine Mischung aus einem größeren Anteil von Whiskers mit vier Nadelkristall−Vorsprüngen und einem kleineren Anteil von Whiskers mit einem, zwei und/oder drei Nadelkristall−Vorsprüngen sind.

12. Fluoreszenzstoff nach Anspruch 9, bei dem die Länge in dem Bereich von 10 bis 50 Mikrometern liegt.

13. Fluoreszenzstoff nach Anspruch 9, bei dem die erwähnten Whiskers mit einem Metall dotiert sind, so daß der spezifische Widerstand in dem Bereich von $10^{-2}$ bis $10^3$ $\Omega \cdot$cm liegt.

14. Fluoreszenzstoff nach Anspruch 9, bei dem die erwähnten Whiskers im Zustand eines Pulverpreßlings bei 5 kg/cm$^2$ einen spezifischen Widerstand von $10^3$ bis $10^6$ $\Omega \cdot$cm haben.

15. Fluoreszenzstoff nach Anspruch 9, bei dem das isolierende Material ZnS:Ag, ZnS:Cu,Al oder $Y_2O_2S:Eu^{3+}$ ist.

**Revendications**

1. Matériau fluorescent qui contient essentiellement des whiskers de ZnO comportant chacune un noyau central et une pluralité de cristaux en aiguille qui font saillie en partant radialement du noyau central,

9

les cristaux en aiguille qui font saillie comportant une partie de base qui touche le noyau central dont le diamètre se situe dans une plage allant de 0,7 à 14 micromètres, et ayant une longueur entre leur partie de base et leur pointe comprise entre 3 et 200 micromètres, ou bien, si on utilise des whiskers en ZnO avec un diamètre de noyau central et une longueur en dehors des limites définies ci‑dessus, la quantité des whiskers en ZnO ne dépassant pas 80% en poids de la totalité des whiskers utilisées.

2. Matériau fluorescent selon la revendication 1, dans lequel le nombre de cristaux en aiguille qui font saillie est de quatre.

3. Matériau fluorescent selon la revendication 1, dans lequel lesdites whiskers sont un mélange d'une proportion majoritaire de whiskers avec quatre cristaux en aiguille qui font saillie et d'une proportion minoritaire de whiskers avec un, deux, et /ou trois cristaux en aiguille qui font saillie.

4. Matériau fluorescent selon la revendication 1, dans lequel la longueur se situe entre 80 et 200 micromètres.

5. Matériau fluorescent selon la revendication 1, comportant en outre jusqu'à $10^4$ ppm d'un élément capable de changer les caractéristiques de fluorescence et la couleur de la fluorescence.

6. Matériau fluorescent selon la revendication 5, dans lequel ledit élément est choisi parmi le groupe composé du gallium, des éléments formant les terres alcalines et des éléments formant les terres rares.

7. Materiau fluorescent selon la revendication 1, dans lequel lesdites whiskers sont dopées avec un métal si bien que leur résistance spécifique se situe entre $10-2$ et $10^3$ $\Omega-cm$.

8. Matériau fluorescent selon la revendication 1, dans lequel lesdites whiskers ont une résistance spécifique comprise entre $10^3$ et $10^6$ $\Omega-cm$ à l'état de poudre comprimée à 5 kg/cm$^2$

9. Matériau fluorescent qui contient un mélange d'un matériau fluorescent isolant et d'au moins 4% en poids, par rapport au matériau fluorescent, de whiskers en oxyde de zinc comportant chacune un noyau central et une pluralité de cristaux en aiguille qui font saillie en partant radialement du noyau central, les cristaux en aiguille qui font saillie radialement comportant une partie de base qui touche le noyau central dont le diamètre se situe dans une plage allant de 0,1 à 14 micromètres et ayant une longueur entre leur partie de base et leur pointe comprise entre 6 et 200 micromètres, ou bien, si on utilise des whiskers en ZnO avec un diamètre de noyau central et une longueur en dehors des limites définies ci‑dessus, la quantité desdites whiskers en ZnO ne dépassant pas 80% en poids de la totalité des whiskers utilisées.

10. Matériau fluorescent selon la revendication 9, dans lequel le nombre de cristaux en aiguille qui font saillie est de quatre.

11. Matériau fluorescent selon la revendication 9, dans lequel lesdites whiskers sont un mélange d'une proportion majoritaire de whiskers comportant quatre cristaux en aiguille qui font saillie et d'une proportion minoritaire de whiskers comportant un, deux, et/ou trois cristaux en aiguille qui font saillie.

12. Matériau fluorescent selon la revendication 9, dans lequel la longueur se situe entre 10 et 50 micromètres.

13. Matériau fluorescent selon la revendication 9, dans lequel lesdites whiskers sont dopées avec un métal si bien que leur résistance spécifique se situe entre $10^{-2}$ et $10^3$ $\Omega-cm$.

14. Matériau fluorescent selon la revendication 9, dans lequel lesdites whiskers ont une résistance spécifique comprise entre $10^3$ et $10^6$ $\Omega-cm$ à l'état de poudre compressée à 5 kg/cm .

15. Matériau fluorescent selon la revendication 9, dans lequel le matériau isolant est du ZnS:Ag, ZnS:Cu, Al, ou $Y_2 O_2$ S:Eu $^{3+}$ .

10 μm